# EUROPEAN PATENT SPECIFICATION

(11) **EP 4 684 483 B1**
(45) Date of publication and mention of the grant of the patent: **11.11.2026**
(21) Application number: 24711230.3
(22) Date of filing: 18.03.2024
(51) Int. Cl.: H04B 10/112, H04B 10/114

(54) **AN OPTICAL WIRELESS COMMUNICATION DEVICE**
OPTISCHES SYSTEM FÜR OPTISCHE DRAHTLOSE KOMMUNIKATION
SYSTÈME OPTIQUE POUR COMMUNICATION OPTIQUE SANS FIL

(30) Priority: 23.03.2023 EP 23163709
(43) Date of publication of application: 28.01.2026
(73) Proprietor: Signify Holding B.V., 5656 AE Eindhoven (NL)
(72) Inventor: WENDT, Matthias, 5656 AE Eindhoven (NL)
(74) Representative: Verweij, Petronella Daniëlle
(86) International application number: PCT/EP2024/057117
(87) International publication number: WO 2024/194239

(56) References cited:
- US-A- 5 117 301
- US-A- 5 646 761
- US-A1- 2015 037 045
- US-A1- 2023 006 740

## Description

### FIELD OF THE INVENTION

The present invention relates to the field of optical wireless communication, and in particular to an optical wireless communication device.

### BACKGROUND OF THE INVENTION

Optical instruments, such as laser transmitters and laser receivers are used in construction. United States patent application US2015/0037045 for example discloses a system comprising two devices; a laser transmitter and a laser receiver each fitted with a radio frequency wireless communication system. In operation the laser emitter is designed to provide a laser light plane and includes a control unit connected to a Radio Frequency (RF) communication signal receiver. The control unit is arranged to work and compute incoming communication signals from a remote laser receiver. The laser receiver comprises an RF communication signal transmitter for communicating with the laser emitter, a linear laser light photosensor and an acceleration sensor both connected to a circuitry which is designed to derive a movement of the laser receiver with respect to the detected laser beam of the laser emitter from computing and correlating the signals of the acceleration sensor and the laser light photo sensor. The control unit in the laser transmitter includes an adjustment unit and adjustment is carried out by the adjustment unit in dependence of the worked and computed incoming RF communication signals received from the laser receiver.

Wireless communications by means of modulated light is becoming increasingly common in use, and is commonly called optical wireless communication (OWC).

Optical wireless communication refers to techniques in which information is communicated in the form of a signal embedded in light emitted by a light source. In this context, light may include any visible or invisible light (such as infrared light). Depending upon the specific wavelengths used, such techniques may also be referred to as coded light, Light Fidelity (LiFi), visible light communication (VLC) or free-space optical communication (FSO).

Optical wireless communication can be performed with wide field-of-view (FoV) beams or with concentrated or collimated beams of light. In approaches that make use of concentrated/collimated beams, the transceivers on both sides need to be properly aligned to allow communication in both directions.

There is therefore a desire to improve mechanisms for aligning a beam generated by one optical wireless communication device with its communication partner.

### SUMMARY OF THE INVENTION

The invention is defined by the claims.

According to examples in accordance with an aspect of the invention, there is provided an optical wireless communication device.

The optical wireless communication device comprising: an optical system and a modem for communicating with a remote optical wireless communication device, the optical system comprising: a light generating system configured to generate and output a line beam that, if incident upon a hypothetical planar surface at a working distance from the light generating system would illuminate a region of the hypothetical planar surface; a light rotating system configured to controllably set an angle at which the line beam is output from the optical system; and a beam control system configured to, during a first mode of operation of the optical system, control the operation of the light rotating system, to incrementally adjust the angle that the line beam is output from the optical system, the optical wireless communication device characterized in that it comprises: a light receiving system configured to receive reflections of the line beam or responses to the line beam from the remote optical wireless communication device;
the modem is for communicating with a remote optical wireless communication device using the optical system;
the region of the hypothetical planar surface having a length at least five times larger than its width; and
wherein the light receiving system is configured to, during the first mode of operation of the optical system, monitor the intensity of any received reflections of the line beam; at the end of the first mode of operation of the optical system, identify the angle for which the intensity of any received reflections was the largest during the first mode of operation, and wherein the optical wireless communication device is configured to use the identified angle to configure the optical system for optical wireless communication with the remote optical wireless communication device.

The present disclosure proposes a new scheme for performing an optical scan that makes use of a line beam to identify the relative location of a communication partner of an optical wireless communication device. In particular, an optical system is configured to produce a line projection of light, i.e., a line beam having a length no less than 5 times greater than its width (e.g., when measured within a hypothetical plane intersected by the line beam). This line beam can then be rotated about a rotation axis to perform an incremental search of a relatively large area, whilst being able to track a direction from which a reflection or response is received, these received reflections may be indicative of the presence of a potential communication partner being lit-up by the light beam. By rotating the line beam about the rotation axis (which may correspond with the optical systems optical axis), the line beam can illuminate line segments in a hypothetical plane orthogonal to the axis of rotation. In practice, the rotating line segments will not be projected on a plane but will rather illuminate objects in the coverage area of the optical system. So when used in an interior setting, the line segments will be projected onto the room structure and objects in the interior of the room, and by rotating the line beam as described the coverage area of the optical system may be traversed faster than using a point-beam.

The proposed approach provides an efficient mechanism for searching for a communication partner.

In some examples, the light rotating system is configured to controllably define the angle such that the angle that a projection of the line beam makes on the hypothetical planar surface at the working distance from the light generating surface changes responsive to changes in the defined angle. In other words, the light rotating system is configured to controllably define an angle that the line beam output from the optical system makes around a fixed rotation axis out of the optical system.

In some examples, the beam control system is configured to, during the first mode of operation of the optical system, incrementally adjust the angle that the line beam is output from the optical system until the line beam has undergone a rotation of between 170° and 190° with respect to the optical system.

In some examples, the beam control system is configured to, during the first mode of operation of the optical system, incrementally adjust the angle that the line beam is output from the optical system until the line beam has undergone a rotation of at least 180° with respect to the optical system.

Optionally, the beam control system is configured to, during the first mode of operation of the optical system, incrementally adjust the angle that the line beam is output from the optical system until the line beam has undergone a rotation of 360° with respect to the optical system.

In some examples, the beam control system is configured to, during a second mode of operation of the optical system, fix the angle that the line beam is output from the optical system to the angle for which the intensity of any received reflections was the largest during the first mode of operation.

In some examples, the light generating system is configured to controllably define a center of intensity of the line beam. The beam control system may be configured to: control the operation of the light generating system so as to control the center of intensity of the line beam; and during a third mode of operation of the optical system, incrementally adjust the position of the center of intensity of the line beam whilst maintaining the line beam at the angle for which the intensity of any received reflections was the largest, in this manner it is possible to detect the specific direction (along the line) where a potential communication partner may be located.

The light receiving system may be configured to: during the third mode of operation of the optical system, monitor the intensity of any received reflections of the line beam; and at the end of the third mode of operation of the optical system, identify the position of the center of intensity for which the intensity of any received reflections was the largest during the third mode of operation, thereby enabling the detection of light reflected back towards the beam control system.

In some examples, the beam steering system may be configured to, after the third mode of operation, fix the line beam to lie in a same direction as the direction for which the intensity of any received reflections was the largest during the third mode of operation. The fixed line beam may thereafter be used to communicate with the communication partner.

In some examples, the light generating system is configured to output a collimated beam of light, from the optical system, for performing optical wireless communication during a fourth mode of operation of the optical system; and the optical system comprises a beam steering system configured to, during the fourth mode of operation of the optical system, steer the direction of the collimated beam of light within a plane that lies at a same angle, with respect to the optical system, for which the intensity of any received reflections from the line beam was the largest during the first mode of operation.

In some examples, the beam steering system may be configured to, after the fourth mode of operation, control the collimated beam to be directed in a same direction as the direction for which the intensity of any received reflections was the largest during the fourth mode of operation. The collimated beam may thereafter be used to communicate with the communication partner.

In some examples, the beam steering system may be configured to, during the fourth mode of operation, control the collimated beam to be directed in a same direction as the center of intensity for which the intensity of any received reflections was the largest during the third mode of operation (when this is monitored by the light receiving system during the third mode of operation).

The light generating system may comprise: a light beam generator configured to generate an initial collimated beam of light; and an optics system configured to redirect the initial collimated beam of light to produce the line beam.

The light rotating system may be configured to control an angle that the optics system makes with respect to the light beam generator. The light receiving system may be configured to receive any reflections of the line beam via said optics system. **In** particular, this approach significantly improves the signal-to-noise ratio of any received reflections or responses to the line beam, and can facilitate identification of even low intensity reflections or responses. This is particularly advantageous for facilitating identification of a communication partner positioned a long distance away, where the intensity of a reflection or response may be attenuated at least due to the distance, scattering on the distant reflector (e.g., due to dirt or the like) or scattering/absorption in the medium between the optical system and the communication partner (e.g., the presence of air particles, such as would be found in dust or mist).

In some examples, the light generating system is configured to generate and output a line beam that, if incident upon a hypothetical planar surface at a working distance from the light generating system would illuminate a region of the hypothetical planar surface having a length at least twenty times larger than its width.

Preferably, the working distance is no more than 500m from the light generating system, e.g., no more than 100m from the light generating system, e.g., no more than 20m from the light generating system, e.g., no more than 0.5m from the light generating system. The minimum working environment may, for instance, depend upon the use case scenario in which the optical system is to be employed. For instance, if the optical system is to be employed in long-range communications, then a working distance of 500m is acceptable. For short-range communications, e.g., automobile-to-automobile communications (also known as vehicle-to-vehicle or V2V communication), or automobile-to-infrastructure communication (also known as vehicle-to-infrastructure or V2I communication, such as for offloading large volumes of data, such as telemetry data) then a smaller working distance (e.g., 0.5m) is preferred.

There is also proposed a method for determining for an optical wireless communication device, a relative direction where a remote optical wireless communication device is located, the optical wireless communication device having an optical system and a modem for communicating with the remote optical wireless communication device. The method comprises: using a light generating system of the optical system to generate and output a line beam that, if incident upon a hypothetical planar surface at a working distance from the light generating system would illuminate a region of the hypothetical planar surface; incrementally adjusting, using a light rotating system, an angle at which the line beam is output from the optical system;
the method characterized in that it further comprises: receiving any reflections of or responses to the line beam from the remote wireless communication device at a light receiving system of the optical system; and determining, based on the received reflections, the angle that the line beam makes with respect to the optical system when it intersects with the communication partner, to thereby determine the relative direction where the remote optical wireless communication device is located with respect to the optical wireless communication device and using the identified angle to configure the optical system to setup optical wireless communication with the remote optical wireless communication device and the region of the hypothetical planar surface having a length at least five times larger than its width and.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates an optical system for use in an embodiment;
Fig. 2 illustrates a first optics system for creating a line beam;
Fig. 3 illustrates a second optics system for creating a line beam;
Fig. 4 illustrates projections of line beams of different angles on a same hypothetical planar surface;
Fig. 5 illustrates a method performed by a proposed optical system;
Fig. 6 illustrates a signal responsive to a reflection of and/or response to a rotating line beam;
Fig. 7 illustrates another method performed by the proposed optical system;
Fig. 8 illustrates a further method performed by the proposed optical system;
Fig. 9 illustrates an alternative line beam;
Fig. 10 illustrates a signal responsive to a reflection of and/or response to the alternative line beam;
Fig. 11 illustrates yet another method performed by a proposed optical system; and
Fig. 12 illustrates an optical wireless communication system.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an optical system for use in identifying the location of a communication partner for an optical wireless communication device. The optical system is configured to generate a line beam, which is a beam of light having a width five or more times larger than its height. The line beam is rotated and the intensity of any reflections/responses to the line beam are recorded. The angle at which the intensity is the greatest is identified and used to determine the location of the communication partner. The proposed technique involving a line beam allows the optical system to more efficiently scan for communication partners within its coverage area, as in comparison to the use of a "point-beam" it uses a process that may converge faster as multiple locations are scanned in parallel.

One recognition of the present invention is that a communication partner for an optical wireless communication device is configured to reflect light received from the optical wireless communication device (e.g., using retroreflectors surrounding a light sensor) or emit a response to received light (e.g., in the form of a light beam emitted by the communication partner, which may be directed in at least a direction in which light was received from).

The present invention makes use of this recognition to provide a structured approach for identifying the location of the communication partner. In particular, it is proposed to rotate a line beam to identify a plane that lies between the optical wireless communication device and the communication partner. This plane can then be explored (e.g., using a center of intensity of the line beam and/or a collimated beam of light) in order to identify the location of the communication partner. Alternatively, this plane can define a direction in which to move a direction of the line beam for converging upon the direction of the communication partner. This provides a system that acts to efficiently narrow down or converge upon the location of the communication partner.

Embodiments can be employed in any optical wireless communication system in which two optical wireless communication devices desire or want to communicate with one another. Examples include automobile-to-automobile communications and/or aircraft-to-aircraft communications, although other use case scenarios will be apparent to the skilled person.

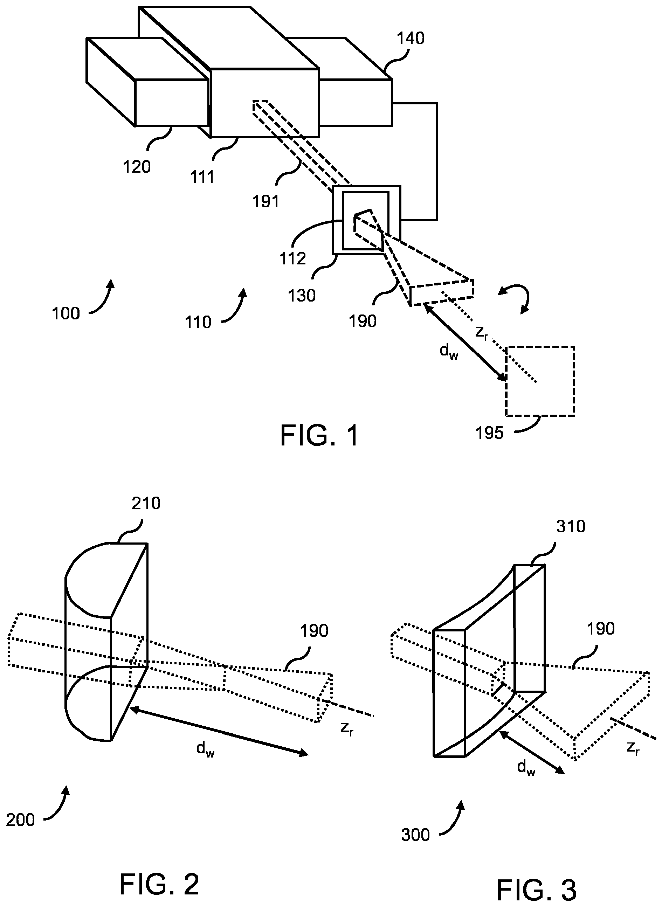

Figure 1 conceptually illustrates an optical system 100 in which embodiments of the invention can be employed. The optical system is used for localizing or identifying the location of a communication partner (not shown).

The optical system 100 comprises a light generating system 110, a light receiving system 120, a light rotating system 130 and a beam control system 140.

The light generating system 110 is configured to generate and output a line beam 190. The line beam 190 is configured such that, if incident upon a hypothetical planar surface 195 at a working distance d_{w} from the light generating system would illuminate a region of the hypothetical planar surface 195 having a length at least five times larger than its width. In other words, the line beam is a line or linear projection of light that creates, when incident on a planar surface, a line or linear projection.

The working distance may be a value between 0.5m and 1000m, e.g.: 500 m, 100 m, 20 m or 0.5 The precise value of the working distance may depend upon the use case scenario for the optical system. If it is known that a communication partner will be very distant (e.g., for space-based applications), then a larger working distance could be used. Similarly, if it is known that a communication partner will be close (e.g., for automobile-to-automobile communications), then a significantly smaller working distance should be used.

In this way, the light generating system 110 generates a line beam 190 (of light). As mentioned previously, a line beam 190 creates a line of light when incident upon a planar surface 195. A line of light is herein defined as an illuminated region that has a length at least five times larger than its width, and preferably at least ten times larger than its width, and preferably at least twenty times larger than its width, and more preferably at least one hundred times larger than its width.

It will be appreciated that, in practice, the line beam is likely to have a varying intensity. In particular, an intensity at a center of the line beam (e.g., closer to an axis of symmetry of the line beam) will be greater than at the edges of the line beam. Embodiments can exploit this property for improved localization of the communication partner, as later described.

In the illustrated example, the light generating system 100 comprises a light beam generator 111 configured to generate an initial collimated beam of light 191; and an optical system 112 configured to redirect the initial collimated beam of light to produce the line beam.

The line beam may only comprise light within a limited wavelength band, e.g., a wavelength band no greater than 20nm in width, e.g., no greater than 10nm in width. For instance, the line beam may comprise only light of a single wavelength (within practical limitations).

Figure 2 illustrates a first example of an optics system 200. The optics system 200 comprises a convex lens 210 configured to converge the initial collimated beam of light along a single axis (which, after converging, diverges to form the line beam 190).

Figure 3 illustrates a second example of an optics system 300. The optics system 300 comprises a concave lens 310 configured to diverge the initial collimated beam of light along a single axis to form the line beam 190.

As yet another example (not illustrated) the optics system may comprise a convex/concave mirror for creating the line beam 190 using reflection.

As yet another example, the optics system comprises one or more diffractive optical elements (DOE). A DOE utilizes a microstructure surface relief profile to perform their optical function. Light transmitted by a DOE can be reshaped to almost any desired distribution, through diffraction and subsequent propagation of light. Suitable DOEs are readily available, e.g., from HOLOEYE^{®}.

The skilled person would readily understand how to configure an optics system that is able to manipulate an initial collimated beam of light to create the desired line beam.

Turning back to Figure 1, the light receiving system 120 is configured to receive any reflections of the line beam or responses to the line beam. In particular, the light receiving system may be configured to produce one or more electrical signals responsive to any received reflections or responses to the line beam. Thus, the light receiving system 120 may be or comprise a light detector 120 for detecting and/or monitoring light reflections and/or light responses to at least the line beam. The amplitude of a signal produced by a light detector will vary for different intensities of light. The light detector may be tuned to the specific wavelength or wavelengths of light contained in the line beam for improved performance and signal-to-noise ratio.

As an example, the light receiving system 120 may comprise one or more light responsive components, such as a camera, digital sensor, CMOS sensors, CCD, phototransistor and so on.

In some embodiments, if present, the same optics system may be used to direct light from the line field into the detector. The line field is the region or volume illuminated by the line beam. In this way, any spurious light outside the line field can be mitigated, to improve the performance of the light receiving system. In particular, such a technique will significantly increase the sensitivity of the light receiving system to light within the line beam, and improve the signal-to-noise ratio.

The light rotating system 130 is configured to controllably define an angle that the line beam is output from the optical system. As a simple example, the light rotating system 130 may be able to rotate the optics system of the light generating system in order to control or change the angle of the line beam. Approaches for rotating an optics system are well known to the skilled person, e.g., making use of one or more motors to perform the rotation or the like.

In particular, the light rotating system 130 is configured to control an angle that the line beam makes around a rotation axis zᵣ that extends out of the light generating system 110. Thus, the rotation axis represents an axis about which the line beam rotates, wherein the axis extends outwardly from the light generating system (particularly the optics system 112).

As illustrated, the rotation axis zᵣ may, for instance, represent a center of the field of view of the light generating system, i.e., the center of the line beam or the volume that can be illuminated using the light generating system. Thus, the rotation axis zᵣ may effectively act to bisect the line beam, e.g., to lie in a plane that bisects the line beam.

Alternatively, and as later described, the rotation axis zᵣ may be at an edge of the field of view of the light generating system, i.e., along an edge of the line beam. In particular, this edge will be a side edge or shortest edge of the light beam.

Other suitable positions for the rotation axis zᵣ will be apparent to the skilled person, e.g., to lie at any position within the field of view of the line beam.

In preferred examples, the angle between the rotation axis zᵣ and the line beam is maintained, (e.g., at 0°) as the line beam is rotated thereabout by the light rotating system. This differs, for instance, from an angle that the line beam makes with respect to the same rotation axis zᵣ.

Conceptually, if the rotation axis zᵣ is positioned along a general direction taken by the line beam 190, the light rotating system 130 is configured to change a yaw that the line beam 190 makes with respect to this axis.

Put yet another way, the light rotating system is configured to controllably define the angle such that the angle that a projection of the line beam makes on the hypothetical planar surface (at the working distance from the light generating surface) changes responsive to changes in the defined angle.

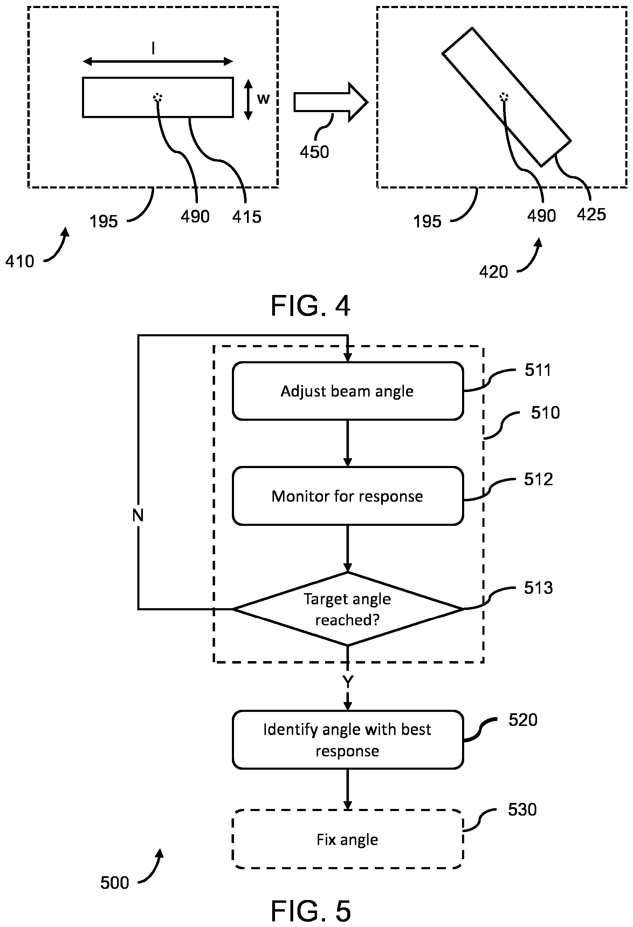

Figure 4 illustrates the effect of a change in angle of the line beam on the angle made on the hypothetical planar surface 195.

In particular, at a first point in time 410, the line beam would illuminate a first region 415 (i.e., a projection) of the hypothetical planar surface 195 having a length l at least five times larger than its width w.

At a second point in time 420, after the light rotating system has rotated the angle of the line beam in process 450, the line beam illuminates a second region 425. The second region 425 is angled with respect to the first region 415, such that the angle of the illuminated region on the hypothetical planar surface has changed.

In other words, the angle that a projection 425 of the line beam makes on the hypothetical planar surface (at the working distance from the light generating surface) has changed responsive to a change in the defined angle.

Figure 4 also illustrates a shape of the projection of the line beam on the hypothetical planar surface. In particular, it is evident that the projection of the line beam (i.e., the shape of the first 415 or second 425 illuminated region) has a length l at least five times greater than its width w. In the context of the present disclosure, a length is the largest dimension of a two-dimensional shape, with the width being perpendicular to the length.

Preferably, the length is at least ten times larger than the width, and preferably at least twenty times larger than the width, and more preferably at least one hundred times larger than the width.

It is not essential, as illustrated, that the projection of the line beam be a cuboid. Rather, the projection may, in practice, be an ellipse - i.e., an eccentric ellipse.

Element 490 conceptually illustrates the location of an axis of rotation.

Turning back to Figure 1, the beam control system 140 is configured to control the operation of the light rotating system, during a first mode of operation of the optical system, to incrementally adjust the angle that the line beam is output from the optical system.

The first mode of operation thereby effectively acts as a searching mode of operation, in which the line beam 190 is rotated in order to illuminate a volume, which acts as a search area. Any reflections or responses to the line beam 190 by the communication partner are identified by the light receiving system. Thus, if the communication partner is within a region or volume illuminated by the rotation of the line beam 190 (i.e., within the search area), the location or direction of the communication partner with respect to the optical system can be determined.

The beam control system 140 may be configured to, during the first mode of operation of the optical system, incrementally adjust the angle that the line beam is output from the optical system until the line beam has undergone a rotation of at least 180° with respect to the optical system.

A rotation of around 180° (e.g., between 170° and 190° or between 180° and 190°) is particularly advantageous when the axis of rotation zᵣ is positioned at a center of the line beam, as in such embodiments, further rotation beyond 180° will only cover a region that has been previously investigated.

In this way, the line beam is effectively able to cover an entire point of view. In particular, as the line beam is effectively elongate in one direction, a rotation of 180° will cover a wide area.

In some examples, the beam control system is configured to, during the first mode of operation of the optical system, incrementally adjust the angle that the line beam is output from the optical system until the line beam has undergone a rotation of 360° with respect to the optical system. This approach can take account of any discontinuity in the line beam to ensure that a full field of view is identified.

It will be apparent that the proposed approach provides an effective way for light to be distributed out from the optical system in an efficient and traceable/trackable manner. In particular, it is possible to monitor for any reflections or responses during the first mode of operation (as the beam is incrementally used), and identify a most likely planar angle from which reflections or responses are received.

The optical system could then be used to identify a position of the reflecting/responding system, i.e., the communication partner. This can be used to localize the reflecting/responding system for ease of communication.

Figure 5 is a flowchart illustrating a method 500 performed by the optical system previously disclosed. The method is configured to identify the best or near-best angle to which the light beam should be rotated in order to facilitate communications with a communication partner.

Initially, the optical system operates in a first mode of operation 510.

During the first mode of operation 510, the beam angle is incrementally adjusted in a step 511. Thus, step 511 comprises incrementally adjusting the angle that the line beam is output from the optical system. This is performed by the beam control system 140 controlling the operation of the light rotating system 130.

During the incremental adjustments, any response or reflections to the line beam is monitored (i.e., registered or recorded). This is conceptually illustrated by step 512, which can be performed after each incremental adjustment in step 511, as illustrated, or simultaneously with the incremental adjustments. Step 512 is performed by the light receiving system.

It will be appreciated that, in step 512, any reflection/response to the line beam and the angle at which the line beam was emitted is recorded. In this way, it is possible to track reflections/responses with changes in the angle of the line beam.

The first mode of operation ends when the line beam has undergone a predetermined rotation (e.g., around 180° or around 360°). In order words, the first mode of operation 510 is ended when a target angle (e.g., around 180° or around 360° has been reached). This can be determined in a determination step 513, which determines whether the target angle has been reached. In response to a positive determination, the first mode of operation 510 ends. Otherwise, the beam angle is again incrementally adjusted, i.e., the method reverts back to step 511.

The method 500 may then, at the end of the first mode of operation 510 of the optical system, perform a step 520 of identifying the angle for which the intensity of any received reflections was the largest during the first mode of operation 510. By identifying the angle for which the intensity of any received response/reflection was the largest, a line along which the reflecting/responding device lies from the perspective of the light generating system or within the field of view of the light generating system.

Thus, step 520 is able to effectively determine, based on the received reflection(s)/response(s), the angle that the line beam makes about the rotation axis when it intersects with the communication partner. This thereby facilitates or performs determination of the relative location of the communication partner with respect to the optical wireless communication device.

Step 520 is performed by processing the recorded angles and any reflections/responses monitored in step 512. This can be performed by the light receiving system of the optical system.

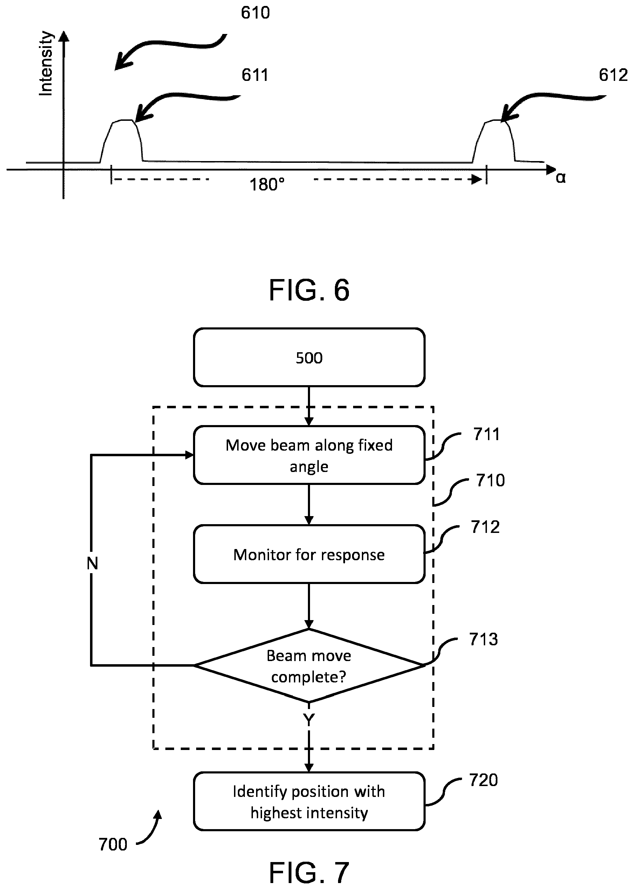

Figure 6 exemplarily illustrates the relation of the angle α of the line beam and the amplitude of a signal that changes responsive to an intensity of a reflection of and/or response to the light beam. Figure 6 illustrates the scenario where the axis of rotation of the line beam is at a center of the line beam.

In particular, Figure 6 illustrates a signal 610 that responds to an intensity of a reflection or response to the light beam against the angle of the light beam, as previously explained.

The amplitude of the signal 610 has a first peak 611 and a second peak 612, each of which represent a reflection from a communication partner. The peaks thereby indicate different angles about the rotation axis at which the light beam is emitted and receives a reflection or response. The peaks are 180° apart, as this effectively represents a same volume illuminated by the light beam.

It will be appreciated that, if the axis of rotation is not located at the center of a line beam, then one of these peaks 611, 612 may disappear, dependent upon whether the communication partner is positioned within the volume illuminated by the light beam when it is rotated by 180°.

Turning back to Figure 5, it will be apparent that method 500 provides a mechanism for effectively identifying a line or plane along which a responding/reflecting optical device lies. This line or plane is defined by the angle the line beam makes with respect to the rotation axis zᵣ of the light generating system.

In some examples, it is sufficient for the purposes of communication to communicate by transmitting encoded light within this line or plane.

Thus, in a simple example (and as illustrated by Figure 5), the method may move directly to a step 530 of fixing the angle that the line beam is output from the optical system to the angle for which the intensity of any received reflections was the largest during the first mode of operation. In this way, step 530 acts as a second mode of operation of the optical system. Communication with the communication partner may then be initiated by controlling or modulating the line beam at this fixed angle.

However, it would be preferable, for the purposes of improved security and reliability of communication, to further identify the relative position of the communication partner along this line or plane, i.e., to more specifically identify the position of the communication partner.

This can be achieved, for instance, by either moving a center of intensity of the light beam along this line (i.e., moving the center of intensity but maintaining the angle) or by using a spotlight (e.g., collimated beam of light) and positioning it along the line or within the plane defined by the angle.

An embodiment of this procedure is illustrated by Figure 7, which is a flowchart illustrating a method 700 performed by the optical system.

The method 700 comprises performing a previously described method 500 for identifying the angle for which the intensity of any received reflections was the largest during the first mode of operation.

The method 700 then moves to a third mode of operation 710. In the third mode of operation 710, the optical system steers or changes a center of intensity of the line beam whilst maintaining the angle of the line beam at the identified angle.

In particular, the line beam is incrementally moved in a step 711 at the identified angle. In this way, the line beam is moved such that, if incident upon the hypothetical planar surface, it would move parallel to, and at least partially overlapping, a region that would have been illuminated by the line beam at the determined angle.

During the incremental movements, any responses or reflections to the line beam are monitored (i.e., registered or recorded). This is conceptually illustrated by step 712, which can be performed after each incremental movement in step 711, as illustrated, or simultaneously with the incremental movements. Step 712 is performed by the light receiving system.

It will be appreciated that, in step 712, any reflection/response to the line beam and the direction in which the line beam was emitted is recorded. In this way, it is possible to track reflections/responses with changes in the direction of the line beam.

The third mode of operation ends when the line beam has finished its investigation, e.g., when the line beam has been moved to all positions within the practical restrictions of the light generating system.

This can be determined in a determination step 713. In response to a positive determination, the third mode of operation 710 ends. Otherwise, the direction of the line beam is again incrementally moved or steered, i.e., the method reverts back to step 711.

The method 700 may then, at the end of the third mode of operation 710 of the optical system, perform a step 720 of identifying the direction of the line beam for which the intensity of any received reflections or responses was the largest during the third mode of operation.

Alternatively, if reflections are monitored, then step 720 may comprise identifying the direction of the line beam for which the intensity of any received reflections suddenly drops or dips from a peak before rising again to the peak. This can indicate a position in which the center of intensity is directed at a light receiving element of the communication partner (which will absorb light rather than reflect it). Such light receiving elements are typically surrounded by reflectors, e.g., retroreflectors, such that this technique is able to efficiently identify the (optimum) location in which to direct light.

Step 720 is performed by processing the recorded angles and reflections/responses monitored in step 712. This can be performed by the light receiving system of the optical system.

In an variation of method 700, the size of the line beam is reduced after performing method 500 and before entering the third mode of operation. This effectively acts to concentrate the size of the line beam, to facilitate more robust identification of the direction of the communication partner.

In some examples, the third mode of operation is iteratively repeated with iteratively reduced sizes for the line beam. This facilitates an iterative technique for narrowing down (i.e., converging upon) or identifying the direction of the communication partner from the optical system.

Modifying the size of a line beam can be performed, for instance, by using a zoom lens to change the size of the line beam. A zoom lens that redirects a received light beam is able to control or otherwise manipulate the size of the output light beam.

In some examples, the light generating system is configured to output a collimated beam of light, from the optical system, for performing optical wireless communication during a fourth mode of operation of the optical system.

The collimated beam of light may, for instance, be the initial collimated beam of light produced by the light beam generator. In such scenarios, the optics system may be removed out of the path of the initial collimated beam of light such that the initial collimated beam of light is output from the optical system (as the collimated beam of light).

In another example, the collimated beam of light may be produced by a different or separate light beam generator, i.e., a second light beam generator. In one such example, the collimated beam of light may be of a different or distinguishable wavelength to that of the line beam. This can help avoid the line beam disturbing communication using the collimated beam of light, whilst allowing the line beam to continue performing a search operation even if communications have already been initiated (e.g., to account for moving communication device).

In examples, the optical system may comprise a beam steering system. The beam steering system is configured to steer the direction of a collimated beam of light output by the optical system. The beam steering system may therefore control the direction of the collimated beam of light produced by the light beam generator (if the optics system can be disengaged) or the collimated of light produced by the second light beam generator (if present).

The beam steering system may be configured to, during the fourth mode of operation of the optical system, steer the direction of the collimated beam of light within a plane that lies at a same angle, with respect to the optical system, for which the intensity of any received reflections from the line beam was the largest during the first mode of operation.

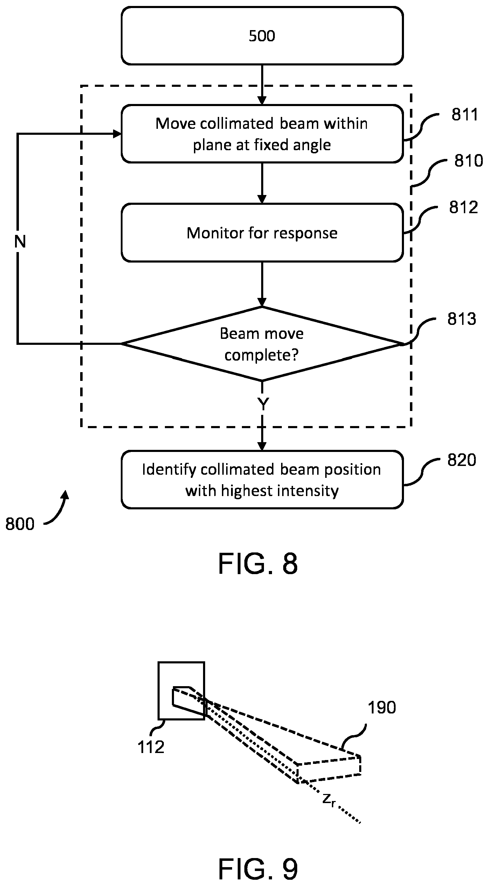

An embodiment of this procedure is illustrated by Figure 8, which is a flowchart illustrating a method 800 performed by the optical system.

The method 800 comprises performing a previously described method 500 for identifying the angle for which the intensity of any received reflections was the largest during the first mode of operation.

The method 800 then moves to a fourth mode of operation 810. In the fourth mode of operation 810, the optical system steers the direction of the collimated beam of light within a plane that lies at a same angle, with respect to the optical system, for which the intensity of any received reflections from the line beam was the largest during the first mode of operation.

In particular, the collimated beam of light is incrementally moved in a step 811 within this plane. In this way, the collimated beam of light is moved such that, if incident upon the hypothetical planar surface, it would move within a region that would have been illuminated by the line beam at the determined angle.

During the incremental movements, any responses or reflections to the collimated beam of light are monitored (i.e., registered or recorded). This is conceptually illustrated by step 812, which can be performed after each incremental movement in step 811, as illustrated, or simultaneously with the incremental movements. Step 812 is performed by the light receiving system.

It will be appreciated that, in step 812, any reflection/response to the collimated beam of light and the direction in which the collimated beam of light was emitted is recorded. In this way, it is possible to track reflections/responses with changes in the direction of the collimated beam of light.

The fourth mode of operation ends when the collimated beam of light has finished its investigation of the region previously illuminated by the line beam - i.e., within the plane,. Thus, the fourth mode of operation may end when the collimated beam of light has explored the entirety of the plane within the practical restrictions of the light generating system.

This can be determined in a determination step 813. In response to a positive determination, the fourth mode of operation 810 ends. Otherwise, the direction of the collimated beam is again incrementally moved or steered, i.e., the method reverts back to step 811.

The method 800 may then, at the end of the fourth mode of operation 810 of the optical system, perform a step 820 of identifying the direction of the collimated beam for which the intensity of any received reflections or responses was the largest during the fourth mode of operation. By identifying the direction of the collimated beam, then the direction of a communication partner for the optical system can be determined.

Alternatively, if reflections are monitored, then step 820 may comprise identifying the direction of the collimated beam of light for which the intensity of any received reflections suddenly drops or dips from a peak (in previous directions) before rising again to the peak (in subsequent directions). This can indicate a position in which the beam is directed at a light receiving element of the communication partner (which will absorb light rather than reflect it).

Step 820 is performed by processing the recorded angles and reflections/responses monitored in step 812. This can be performed by the light receiving system of the optical system.

In previously described embodiments, the axis of rotation lies in the center of the line beam, i.e., lies in a plane that bisects the line beam (which plane is parallel to a width of the line beam).

However, this is not essential. In alternative embodiments, the axis of rotation may lay along an edge of the line beam. This is conceptually illustrated in Figure 9, which illustrates a portion of the optical system and the line beam 190. As illustrated, the axis of rotation zᵣ lies at an edge of the line beam.

Selecting the position of the axis of the rotation zᵣ can be readily achieved through appropriate design of the light generating system, particularly the optics system 112 (if present).

This technique allows a larger search area to be investigated for a same line beam size, compared to positioning the axis of rotation zᵣ within the line beam, e.g., at the center of the line beam. In particular, the effective radius of a search region is doubled compared to positioning the axis of rotation at the center. It will be clear that a search area is a volume that will be illuminated by the line beam when it undergoes a rotation.

Alternatively, it will be apparent that the size of the line beam could be reduced to achieve a same sized search region (compared to embodiments which position the axis of rotation zᵣ at the center of the line beam).

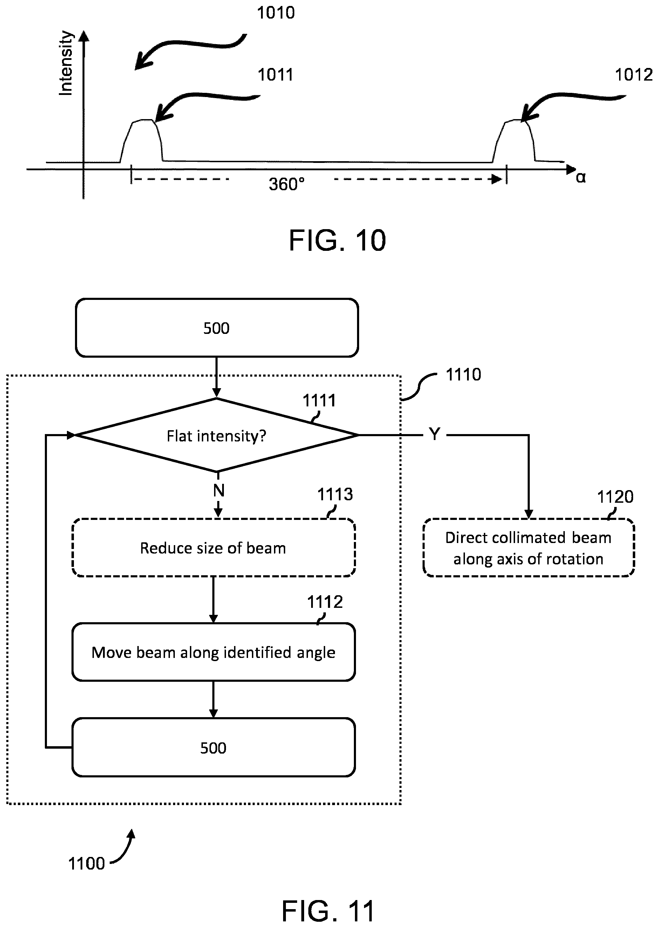

Figure 10 exemplarily illustrates the relation of the angle of the line beam and the amplitude of a signal that changes responsive to an intensity of a reflection of and/or response to the light beam. In particular, Figure 10 illustrates the scenario when the axis of rotation is at an edge of the line beam.

Figure 10 illustrates a signal 1010 that responds to an intensity of a reflection or response to the light beam against the angle α of the light beam, as previously explained. The axis of rotation of the line beam is at an edge of the line beam, the rotation (along the x-axis) indicates a rotation about this axis of rotation.

The amplitude of the signal 1010 has a first peak 1011 and a second peak 1012, each of which represent a reflection from a (single) communication partner. The peaks thereby indicate different angles at which the light beam is emitted and receives a reflection (or response). The peaks are 360° apart, as this this indicates the light beam has undergone a full rotation such that it is again incident upon the communication partner (which provides a response or reflection).

Use of an axis of rotation zᵣ at the edge of line beam 190 opens up alternative (communication partner) searching techniques for faster convergence on the location of the communication partner.

Figure 11 is a flowchart illustrating a method 1100 performed by the optical system.

The method 1100 comprises performing method 500 previously disclosed. The output of method 500 identifies an angle of the line beam (about the rotation axis) at which a reflection or response was received, e.g., an intensity of a receiving or detecting signal was the greatest. This is referred to as the "identified angle".

The method 500 comprises a fifth mode of operation 1110. In the fifth mode of operation, it is determined, in a step 1111, whether or not the intensities across different angles obtained in the most recent iteration of method 500 is flat (and non-zero). If the intensities are flat, this indicates that the axis of rotation is positioned in the direction of the communication partner.

In response to a positive determination in step 1111, the fifth mode of operation ends.

Otherwise, the method 1100 moves to a step 1112 of moving the beam in a direction towards the identified angle of the light beam, i.e., in a direction that from the axis of rotation towards the center of the light beam at the identified angle. The amplitude of the movement is preferably such that the axis of rotation is moved to a position that was previously the center of the light beam when output at the identified angle. The method then repeats method 500, and reverts back to step 1111.

In this way, the position of the axis of rotation converges upon the direction in which the communication partner (and therefore reflection or response) comes from.

In some examples, after the fifth mode of operation 1110, the method comprises a step 1120 of directing a collimated beam along the (most recent) axis of rotation of the line beam. Approaches for controlling a direction of a collimated beam of light have been previously disclosed. The collimated beam can be therefore used to communicate with the communication partner, e.g., by modulating the collimated beam.

In preferred examples, the fifth mode of operation comprises a step 1113 that is performed before each iteration of step 1112. Step 1113 comprises reducing a size of the line beam, e.g., reducing the size of the line beam in half, e.g., reducing the length of the line beam in half. This can be achieved using appropriate zoom lenses as previously described. This approach concentrates the intensity of the line beam as the axis of rotation converges on the communication partner, to thereby improve signal-to-noise characteristics as the fifth mode of operation progresses.

The fifth mode of operation thereby provides a mechanism for determining, based on the received reflections, the angle that the line beam makes with respect to the optical system when it intersects with the communication partner, to thereby determine the relative location of the communication partner with respect to the optical system (and therefore any optical wireless communication device containing the optical system).

In particular, the direction of the axis of rotation after completion of the fifth mode of operation defines the relative location of the communication partner with respect to the optical system. It is then possible to direct, e.g., in a step 1120, a collimated beam along the axis of rotation.

It is possible to modify method 1100 to be carried out even when the axis of rotation lies within the line beam, e.g., at a center of the line beam. In such examples, it will be apparent that it may not be known whether to move/steer the line beam in a direction that stretches away from the axis of rotation at the identified angle or at 180° from the identified angle.

In such examples, step 1112 may comprise initially moving the line beam in a direction that stretches away from the axis of rotation at the identified angle. Step 1111 may be modified to also detect if the intensity of any reflections or responses drops to zero, as this will indicate that the line beam was moved in the wrong direction. In such scenarios, the method may instead move the line beam in a direction that stretches away from the axis of rotation at 180° from the previously identified angle (i.e., the identified angle in the second most recent iteration of method 500). The magnitude of the movement in such a step (e.g., when the movement changes direction) may be double that of the previous movement. Method 500 is then repeated, and the method reverts back to step 1111.

The method 1100 is more robust to changes in the position of the communication partner with respect to the optical system. In particular, small changes in position (which might cause the communication partner to no longer be incident with a light beam held at the previously identified angle) can be taken into account as the method will repeat the process 500 and re-identify the relative location of the communication partner.

Thus, method 1100 can, for instance, be used in facilitating improved communication between two moving communication partners, e.g., moving cars or aircraft.

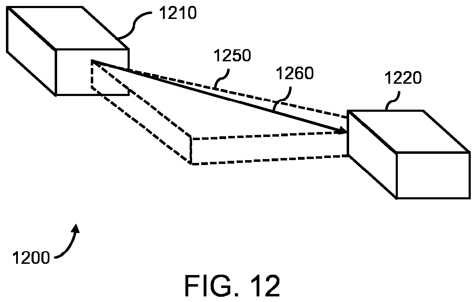

Figure 12 illustrates a system 1200 in which embodiments of the invention can be employed. The system 1200 comprises a first optical wireless communication device 1210 and a second optical wireless communication device 1220.

The first optical wireless communication device 1210 comprises an optical system as previously described. The first optical wireless communication device 1210 also comprises a modem for communicating with the second optical wireless communication device 1220 using the optical system. The modem may be appropriately configured to modulate a light beam in order to perform communication with the second optical wireless communication device, e.g., perform time modulation.

Each communication device is configured to reflect incoming light beams, e.g., using retroreflectors, and/or produce a light beam that is directed towards a direction of the incoming light beam. In this way, if a communication device emits a collimated light beam in a particular direction and receives a response and/or reflection, it is able to predict that the other communication device is aligned in that direction.

To initiate a communication between the first and second optical wireless communication devices, it is necessary for one of the devices to determine the relative location of the other device. In this scenario, the optical system of the first optical wireless communication device is used to first identify an angle for a line beam 1250 that intersects the second optical wireless communication device.

A collimated beam of light 1260 may then be moved within the plane in which the line beam 1250 lies until the direction of the second optical wireless communication device is identified. The direction of the collimated beam of light 1260 can then be locked in or fixed. The collimated beam of light can then be modulated or encoded for communicating from the first optical wireless communication device 1210 to the second optical wireless communication device.

Alternatively, the line beam 1250 may be fixed at the angle and used to perform the communication, e.g., using appropriate modulation or encoding. In some examples, the line beam is reduced in size, as previously explained, and used to perform the communication.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. An optical wireless communication device (1210) comprising: an optical system (100) and a modem for communicating with a remote optical wireless communication device, the optical system comprising:
a light generating system (111) configured to generate and output a line beam (190, 1250), the line beam being a beam that, if incident upon a hypothetical planar (195) surface at a working distance from the light generating system, would illuminate a region (415, 425) of the hypothetical planar surface;
a light rotating system (130) configured to controllably set an angle at which the line beam is output from the optical system; and
a beam control system (140) configured to, during a first mode of operation (510) of the optical system, control the operation of the light rotating system (130) to incrementally adjust (511, 513) the angle that the line beam is output from the optical system; the optical wireless communication device (1210) **characterized in that** it comprises:
a light receiving system (120) configured to receive (512) reflections of the line beam or responses to the line beam from the remote optical wireless communication device;
the modem is for communicating with the remote optical wireless communication device using the optical system;
the region (415, 425) of the hypothetical planar surface has a length (1) at least five times larger than its width (w); and
wherein the light receiving system (120) is configured to during the first mode of operation (510) of the optical system, monitor (512) the intensity of any received reflections of the line beam;
at the end of the first mode of operation of the optical system, identify (520) the angle for which the intensity of any received reflections was the largest during the first mode of operation and
wherein the optical wireless communication device is configured to:
- use the identified angle to configure the optical system for optical wireless communication with the remote optical wireless communication device.

2. The optical wireless communication device (1210) of claim 1, wherein the light rotating system (130) is configured to controllably define the angle such that the angle that a projection of the line beam makes on the hypothetical planar surface at the working distance from the light generating surface changes responsive to changes in the defined angle.

3. The optical wireless communication device (1210) of claim 1 or 2, wherein the beam control system (140) is configured to, during the first mode of operation (510) of the optical system, incrementally adjust (511, 513) the angle that the line beam is output from the optical system until the line beam has undergone a rotation of at least 180° with respect to the optical system.

4. The optical wireless communication device (1210) of claim 1, wherein the beam control system (140) is configured to, during the first mode of operation (510) of the optical system, incrementally adjust (511, 513) the angle that the line beam is output from the optical system until the line beam has undergone a rotation of 360° with respect to the optical system.

5. The optical wireless communication device (1210) of claim 1, wherein the beam control system (140) is configured to, during a second mode of operation of the optical system, fix (520) the angle that the line beam is output from the optical system to the angle for which the intensity of any received reflections was the largest during the first mode of operation.

6. The optical wireless communication device (1210) of claim 1 or 5, wherein:
the light generating system (110) is configured to controllably define a center of intensity of the line beam;
the beam control system (140) is configured to:
- control the operation of the light generating system so as to control the center of intensity of the line beam; and
- during a third mode of operation (710) of the optical system, incrementally adjust (711, 713) the position of the center of intensity of the line beam whilst maintaining the line beam at the angle for which the intensity of any received reflections was the largest.

7. The optical wireless communication device (1210) of claim 6, wherein the light receiving system (130) is configured to:
during the third mode of operation of the optical system, monitor (712) the intensity of any received reflections of the line beam; and
at the end of the third mode of operation of the optical system, identify (720) the position of the center of intensity for which the intensity of any received reflections was the largest during the third mode of operation.

8. The optical wireless communication device (1210) any of claims 1 to 7, wherein:
the light generating system (110) is configured to output a collimated beam (1260) of light, from the optical system, for performing optical wireless communication during a fourth mode of operation (810) of the optical system; and
the optical system comprises a beam steering system configured to, during the fourth mode of operation of the optical system, steer (811, 813) the direction of the collimated beam of light within a plane that lies at a same angle, with respect to the optical system, for which the intensity of any received reflections from the line beam was the largest during the first mode of operation.

9. The optical wireless communication device (1210) of any of claims 1 to 8, wherein the light generating system (110) comprises:
a light beam generator (111) configured to generate an initial collimated beam (191) of light; and
an optics system (112) configured to redirect the initial collimated beam of light to produce the line beam (190).

10. The optical wireless communication device (1210) of claim 9, wherein the light rotating system (130) is configured to control an angle that the optics system (112) makes with respect to the light beam generator (111).

11. The optical wireless communication device (1210) of any of claims 1 to 10, wherein the light generating system (110) is configured to generate and output a line beam (190) that, if incident upon a hypothetical planar surface at a working distance from the light generating system would illuminate a region of the hypothetical planar surface having a length at least twenty times larger than its width.

12. The optical wireless communication device (1210) of claim 11, wherein the working distance is no more than 0.5m from the light generating system (110).

13. A method (500) for determining for an optical wireless communication device a relative direction where a remote optical wireless communication device is located, the optical wireless communication device (1210) having an optical system (100) and a modem for communicating with the remote optical wireless communication device, the method comprising:
using a light generating system of the optical system to generate and output a line beam that, if incident upon a hypothetical planar surface at a working distance from the light generating system would illuminate a region of the hypothetical planar surface;
incrementally adjusting (511, 513), using a light rotating system, an angle at which the line beam is output from the optical system;
the method **characterized in that** it further comprises:
receiving (512) any reflections of or responses to the line beam from the remote wireless communication device at a light receiving system of the optical system; and
determining (520), based on the received reflections, the angle that the line beam makes with respect to the optical system when it intersects with the communication partner, to thereby determine the relative direction where the remote optical wireless communication device is located with respect to the optical wireless communication device, and
using the identified angle to configure the optical system to setup optical wireless communication with the remote optical wireless communication device and the region (415, 425) of the hypothetical planar surface having a length at least five times larger than its width.

## Patentansprüche

1. Optische drahtlose Kommunikationsvorrichtung (1210), umfassend: ein optisches System (100) und ein Modem zur Kommunikation mit einer entfernten optischen drahtlosen Kommunikationsvorrichtung, wobei das optische System umfasst:
ein Lichterzeugungssystem (111), das konfiguriert ist, um einen Linienstrahl (190, 1250) zu erzeugen und auszugeben, wobei der Linienstrahl ein Strahl ist, der, wenn er auf eine hypothetische planare (195) Oberfläche in einem Arbeitsabstand von dem Lichterzeugungssystem einfällt, einen Bereich (415, 425) der hypothetischen planaren Oberfläche beleuchten würde;
ein Lichtrotationssystem (130), das konfiguriert ist, um einen Winkel steuerbar einzustellen, in dem der Linienstrahl aus dem optischen System ausgegeben wird; und
ein Strahlsteuerungssystem (140), das konfiguriert ist, um während eines ersten Betriebsmodus (510) des optischen Systems den Betrieb des Lichtrotationssystems (130) zu steuern, um den Winkel, in dem der Linienstrahl aus dem optischen System ausgegeben wird, inkrementell einzustellen (511, 513); die optische drahtlose Kommunikationsvorrichtung (1210), die **dadurch gekennzeichnet ist, dass** sie umfasst:
ein Lichtempfangssystem (120), das konfiguriert ist, um Reflexionen des Linienstrahls oder Antworten auf den Linienstrahl von der entfernten optischen drahtlosen Kommunikationsvorrichtung zu empfangen (512);
das Modem, das konfiguriert ist, um mit der entfernten optischen drahtlosen Kommunikationsvorrichtung unter Verwendung des optischen Systems zu kommunizieren;
den Bereich (415, 425) der hypothetischen planaren Oberfläche, der eine Länge (1) aufweist, die mindestens fünf Mal größer als seine Breite (w) ist; und
wobei das Lichtempfangssystem (120) konfiguriert ist, um während des ersten Betriebsmodus (510) des optischen Systems die Intensität jeglicher empfangener Reflexionen des Linienstrahls zu überwachen (512);
am Ende des ersten Betriebsmodus des optischen Systems den Winkel, für den die Intensität jeglicher empfangener Reflexionen während des ersten Betriebsmodus am größten war, zu identifizieren (520), und
wobei die optische drahtlose Kommunikationsvorrichtung konfiguriert ist zum:
- Verwenden des identifizierten Winkels, um das optische System für die optische drahtlose Kommunikation mit der entfernten optischen drahtlosen Kommunikationsvorrichtung zu konfigurieren.

2. Optische drahtlose Kommunikationsvorrichtung (1210) nach Anspruch 1, wobei das Lichtrotationssystem (130) konfiguriert ist, um den Winkel steuerbar zu definieren, sodass der Winkel, den eine Projektion des Linienstrahls auf der hypothetischen planaren Oberfläche im Arbeitsabstand von der lichterzeugenden Oberfläche bildet, sich als Reaktion auf Änderungen des definierten Winkels ändert.

3. Optische drahtlose Kommunikationsvorrichtung (1210) nach Anspruch 1 oder 2, wobei das Strahlsteuerungssystem (140) konfiguriert ist, um während des ersten Betriebsmodus (510) des optischen Systems den Winkel, in dem der Linienstrahl aus dem optischen System ausgegeben wird, inkrementell einzustellen (511, 513), bis der Linienstrahl eine Rotation von mindestens 180° in Bezug auf das optische System erfahren hat.

4. Optische drahtlose Kommunikationsvorrichtung (1210) nach Anspruch 1, wobei das Strahlsteuerungssystem (140) konfiguriert ist, um während des ersten Betriebsmodus (510) des optischen Systems den Winkel, in dem der Linienstrahl aus dem optischen System ausgegeben wird, inkrementell einzustellen (511, 513), bis der Linienstrahl eine Rotation von 360° in Bezug auf das optische System erfahren hat.

5. Optische drahtlose Kommunikationsvorrichtung (1210) nach Anspruch 1, wobei das Strahlsteuerungssystem (140) konfiguriert ist, um während eines zweiten Betriebsmodus des optischen Systems den Winkel, in dem der Linienstrahl aus dem optischen System ausgegeben wird, auf den Winkel zu fixieren (520), für den die Intensität jeglicher empfangener Reflexionen während des ersten Betriebsmodus am größten war.

6. Optische drahtlose Kommunikationsvorrichtung (1210) nach Anspruch 1 oder 5, wobei:
das Lichterzeugungssystem (110) konfiguriert ist, um ein Intensitätszentrum des Linienstrahls steuerbar zu definieren;
wobei das Strahlsteuerungssystem (140) konfiguriert ist zum:
- Steuern des Betriebs des Lichterzeugungssystems, um das Intensitätszentrum des Linienstrahls zu steuern; und
- inkrementellen Einstellen (711, 713) der Position des Intensitätszentrums des Linienstrahls während eines dritten Betriebsmodus (710) des optischen Systems, während der Linienstrahl in dem Winkel gehalten wird, für den die Intensität jeglicher empfangener Reflexionen am größten war.

7. Optische drahtlose Kommunikationsvorrichtung (1210) nach Anspruch 6, wobei das Lichtempfangssystem (130) konfiguriert ist zum:
Überwachen (712) der Intensität jeglicher empfangener Reflexionen des Linienstrahls während des dritten Betriebsmodus des optischen Systems; und
Identifizieren (720) der Position des Intensitätszentrums, für die die Intensität jeglicher empfangener Reflexionen während des dritten Betriebsmodus am größten war, am Ende des dritten Betriebsmodus des optischen Systems.

8. Optische drahtlose Kommunikationsvorrichtung (1210) nach einem der Ansprüche 1 bis 7, wobei:
das Lichterzeugungssystem (110) konfiguriert ist, um einen kollimierten Lichtstrahl (1260) aus dem optischen System zum Durchführen einer optischen drahtlosen Kommunikation während eines vierten Betriebsmodus (810) des optischen Systems auszugeben; und
das optische System ein Strahllenkungssystem umfasst, das konfiguriert ist, um während des vierten Betriebsmodus des optischen Systems die Richtung des kollimierten Lichtstrahls innerhalb einer Ebene zu lenken (811, 813), die in einem gleichen Winkel in Bezug auf das optische System liegt, für den die Intensität jeglicher empfangener Reflexionen von dem Linienstrahl während des ersten Betriebsmodus am größten war.

9. Optische drahtlose Kommunikationsvorrichtung (1210) nach einem der Ansprüche 1 bis 8, wobei das Lichterzeugungssystem (110) umfasst:
einen Lichtstrahlgenerator (111), der konfiguriert ist, um einen anfänglichen kollimierten Lichtstrahl (191) zu erzeugen; und
ein Optiksystem (112), das konfiguriert ist, um den anfänglichen kollimierten Lichtstrahl umzulenken, um den Linienstrahl (190) zu erzeugen.

10. Optische drahtlose Kommunikationsvorrichtung (1210) nach Anspruch 9, wobei das Lichtrotationssystem (130) konfiguriert ist, um einen Winkel zu steuern, den das Optiksystem (112) in Bezug auf den Lichtstrahlgenerator (111) bildet.

11. Optische drahtlose Kommunikationsvorrichtung (1210) nach einem der Ansprüche 1 bis 10, wobei das Lichterzeugungssystem (110) konfiguriert ist, um einen Linienstrahl (190) zu erzeugen und auszugeben, der, wenn er auf eine hypothetische planare Oberfläche in einem Arbeitsabstand von dem Lichterzeugungssystem einfällt, einen Bereich der hypothetischen planaren Oberfläche beleuchten würde, dessen Länge mindestens zwanzig Mal größer als seine Breite ist.

12. Optische drahtlose Kommunikationsvorrichtung (1210) nach Anspruch 11, wobei der Arbeitsabstand von dem Lichterzeugungssystem (110) nicht mehr als 0,5 m beträgt.

13. Verfahren (500) zum Bestimmen einer relativen Richtung, in der sich eine entfernte optische drahtlose Kommunikationsvorrichtung befindet, für eine optische drahtlose Kommunikationsvorrichtung, wobei die optische drahtlose Kommunikationsvorrichtung (1210) ein optisches System (100) und ein Modem zum Kommunizieren mit der entfernten optischen drahtlosen Kommunikationsvorrichtung aufweist, wobei das Verfahren umfasst:
Verwenden eines Lichterzeugungssystems des optischen Systems, um einen Linienstrahl zu erzeugen und auszugeben, der, wenn er auf eine hypothetische planare Oberfläche in einem Arbeitsabstand von dem Lichterzeugungssystem einfällt, einen Bereich der hypothetischen planaren Oberfläche beleuchten würde;
inkrementelles Einstellen (511, 513), unter Verwendung eines Lichtrotationssystems, eines Winkels, in dem der Linienstrahl aus dem optischen System ausgegeben wird;
wobei das Verfahren **dadurch gekennzeichnet ist, dass** es ferner umfasst:
Empfangen (512) jeglicher Reflexionen des oder Antworten auf den Linienstrahl von der entfernten drahtlosen Kommunikationsvorrichtung an einem Lichtempfangssystem des optischen Systems; und
Bestimmen (520), basierend auf den empfangenen Reflexionen, des Winkels, den der Linienstrahl in Bezug auf das optische System bildet, wenn er sich mit dem Kommunikationspartner schneidet, um dadurch die relative Richtung zu bestimmen, in der sich die entfernte optische drahtlose Kommunikationsvorrichtung in Bezug auf die optische drahtlose Kommunikationsvorrichtung befindet, und
Verwenden des identifizierten Winkels zum Konfigurieren des optischen Systems, um eine optische drahtlose Kommunikation mit der entfernten optischen drahtlosen Kommunikationsvorrichtung einzurichten, und
wobei der Bereich (415, 425) der hypothetischen planaren Oberfläche eine Länge aufweist, die mindestens fünf Mal größer als seine Breite ist.

## Revendications

1. Dispositif de communication optique sans fil (1210) comprenant : un système optique (100) et modem pour communiquer avec un dispositif de communication optique sans fil distant, le système optique comprenant :
un système de génération de lumière (111) configuré pour générer et émettre un faisceau linéaire (190, 1250), le faisceau linéaire étant un faisceau qui, s'il était incident sur une surface plane hypothétique (195) à une distance de travail du système de génération de lumière, éclairerait une région (415, 425) de la surface plane hypothétique ;
un système de rotation de lumière (130) configuré pour régler de manière contrôlable un angle sous lequel le faisceau linéaire est émis par le système optique ; et
un système de commande de faisceau (140) configuré pour, pendant un premier mode de fonctionnement (510) du système optique, commander le fonctionnement du système de rotation de lumière (130) pour ajuster de manière incrémentielle (511, 513) l'angle sous lequel le faisceau linéaire est émis par le système optique ; le dispositif de communication optique sans fil (1210) **caractérisé en ce qu'il** comprend :
un système de réception de lumière (120) configuré pour recevoir (512) des réflexions du faisceau linéaire ou des réponses au faisceau linéaire provenant du dispositif de communication optique sans fil distant ;
le modem est destiné à communiquer avec le dispositif de communication optique sans fil distant à l'aide du système optique ;
la région (415, 425) de la surface plane hypothétique a une longueur (1) au moins cinq fois plus grande que sa largeur (w) ; et
dans lequel le système de réception de lumière (120) est configuré pour, pendant le premier mode de fonctionnement (510) du système optique, surveiller (512) l'intensité de toute réflexion reçue du faisceau linéaire ;
à la fin du premier mode de fonctionnement du système optique, identifier (520) l'angle pour lequel l'intensité de toute réflexion reçue a été la plus grande pendant le premier mode de fonctionnement et
dans lequel le dispositif de communication optique sans fil est configuré pour :
- utiliser l'angle identifié pour configurer le système optique pour une communication optique sans fil avec le dispositif de communication optique sans fil distant.

2. Dispositif de communication optique sans fil (1210) selon la revendication 1, dans lequel le système de rotation de lumière (130) est configuré pour définir de manière contrôlable l'angle de telle sorte que l'angle auquel une projection du faisceau linéaire est faite sur la surface plane hypothétique au niveau de la distance de travail à partir de la surface génératrice de lumière change en réponse aux changements de l'angle défini.

3. Dispositif de communication optique sans fil (1210) selon la revendication 1 ou 2, dans lequel le système de commande de faisceau (140) est configuré pour, pendant le premier mode de fonctionnement (510) du système optique, ajuster de manière incrémentielle (511, 513) l'angle sous lequel le faisceau linéaire est émis par le système optique jusqu'à ce que le faisceau linéaire ait subi une rotation d'au moins 180° par rapport au système optique.

4. Dispositif de communication optique sans fil (1210) selon la revendication 1, dans lequel le système de commande de faisceau (140) est configuré pour, pendant le premier mode de fonctionnement (510) du système optique, ajuster de manière incrémentielle (511, 513) l'angle sous lequel le faisceau linéaire est émis par le système optique jusqu'à ce que le faisceau linéaire ait subi une rotation de 360° par rapport au système optique.

5. Dispositif de communication optique sans fil (1210) selon la revendication 1, dans lequel le système de commande de faisceau (140) est configuré pour, pendant un deuxième mode de fonctionnement du système optique, fixer (520) l'angle sous lequel le faisceau linéaire est émis par le système optique à l'angle selon lequel l'intensité de quelconques réflexions reçues était la plus grande pendant le premier mode de fonctionnement.

6. Dispositif de communication optique sans fil (1210) selon la revendication 1 ou 5, dans lequel :
le système de génération de lumière (110) est configuré pour définir de manière commandée un centre d'intensité du faisceau linéaire ;
le système de commande de faisceau (140) est configuré pour :
- commander le fonctionnement du système de génération de lumière de manière à contrôler le centre d'intensité du faisceau linéaire ; et
- pendant un troisième mode de fonctionnement (710) du système optique, ajuster de manière incrémentielle (711, 713) la position du centre d'intensité du faisceau linéaire tout en maintenant le faisceau linéaire à l'angle pour lequel l'intensité de quelconques réflexions reçues était la plus grande.

7. Dispositif de communication optique sans fil (1210) selon la revendication 6, dans lequel le système de réception de lumière (130) est configuré pour :
pendant le troisième mode de fonctionnement du système optique, surveiller (712) l'intensité de quelconques réflexions reçues du faisceau linéaire ; et
à la fin du troisième mode de fonctionnement du système optique, identifier (720) la position du centre d'intensité pour laquelle l'intensité de quelconques réflexions reçues a été la plus grande pendant le troisième mode de fonctionnement.

8. Dispositif de communication optique sans fil (1210) selon l'une quelconque des revendications 1 à 7, dans lequel :
le système de génération de lumière (110) est configuré pour émettre un faisceau collimaté (1260) de lumière, à partir du système optique, pour réaliser une communication optique sans fil pendant un quatrième mode de fonctionnement (810) du système optique ; et
le système optique comprend un système d'orientation de faisceau configuré pour, pendant le quatrième mode de fonctionnement du système optique, diriger (811, 813) la direction du faisceau collimaté de lumière dans un plan qui se trouve à un même angle, par rapport au système optique, pour lequel l'intensité de quelconques réflexions reçues du faisceau linéaire était la plus grande pendant le premier mode de fonctionnement.

9. Dispositif de communication optique sans fil (1210) selon l'une quelconque des revendications 1 à 8, dans lequel le système de génération de lumière (110) comprend :
un générateur de faisceau de lumière (111) configuré pour générer un faisceau collimaté (191) de lumière initial ; et
un système optique (112) configuré pour rediriger le faisceau collimaté de lumière initial afin de produire le faisceau linéaire (190).

10. Dispositif de communication optique sans fil (1210) selon la revendication 9, dans lequel le système de rotation de lumière (130) est configuré pour commander un angle auquel le système optique (112) se trouve par rapport au générateur de faisceau de lumière (111).

11. Dispositif de communication optique sans fil (1210) selon l'une quelconque des revendications 1 à 10, dans lequel le système de génération de lumière (110) est configuré pour générer et émettre un faisceau linéaire (190) qui, s'il était incident sur une surface plane hypothétique à une distance de travail du système de génération de lumière, éclairerait une région de la surface plane hypothétique ayant une longueur au moins vingt fois supérieure à sa largeur.

12. Dispositif de communication optique sans fil (1210) selon la revendication 11, dans lequel la distance de travail n'est pas supérieure à 0,5 m du système de génération de lumière (110).

13. Procédé (500) permettant de déterminer pour un dispositif de communication optique sans fil une direction relative où se trouve un dispositif de communication optique sans fil distant, le dispositif de communication optique sans fil (1210) ayant un système optique (100) et un modem pour communiquer avec le dispositif de communication optique sans fil distant, le procédé comprenant :
l'utilisation d'un système de génération de lumière du système optique pour générer et émettre en sortie un faisceau linéaire qui, s'il était incident sur une surface plane hypothétique à une distance de travail du système de génération de lumière, illuminerait une région de la surface plane hypothétique ;
l'ajustement de manière incrémentielle (511, 513), à l'aide d'un système de rotation de lumière, d'un angle sous lequel le faisceau linéaire est émis par le système optique ;
le procédé étant **caractérisé en ce qu'**il comprend en outre :
la réception (512) de toutes réflexions ou réponses au faisceau linéaire provenant du dispositif de communication sans fil distant au niveau d'un système de réception de lumière du système optique ; et
la détermination (520), sur la base des réflexions reçues, de l'angle que forme le faisceau linéaire par rapport au système optique lorsqu'il croise le partenaire de communication, pour déterminer de ce fait la direction relative où le dispositif de communication optique sans fil distant se trouve par rapport au dispositif de communication optique sans fil, et
l'utilisation de l'angle identifié pour configurer le système optique afin d'établir une communication optique sans fil avec le dispositif de communication optique sans fil distant, et
la région (415, 425) de la surface plane hypothétique ayant une longueur au moins cinq fois plus grande que sa largeur.
